(19) Europäisches Patentamt
European Patent Office
Office européen des brevets

(11) Veröffentlichungsnummer: **0 063 544**
**A1**

(12) **EUROPÄISCHE PATENTANMELDUNG**

(21) Anmeldenummer: **82810151.9**

(22) Anmeldetag: **06.04.82**

(51) Int. Cl.[3]: **C 08 F 210/00**
C 08 L 101/00

(30) Priorität: **13.04.81 US 253484**

(43) Veröffentlichungstag der Anmeldung:
**27.10.82 Patentblatt 82/43**

(84) Benannte Vertragsstaaten:
**BE CH DE FR GB IT LI NL**

(71) Anmelder: **CIBA-GEIGY AG**
**Patentabteilung Postfach**
**CH-4002 Basel(CH)**

(72) Erfinder: **Tieh-Yin Fu, Frank**
**23 Tung Shan Street**
**Taipei 100 ROC(TW)**

(72) Erfinder: **Winter, Roland A.E.**
**23 Banksville Road**
**Armonk New York 10504(US)**

(54) **Alpha-Olefincopolymere mit sterisch gehinderten Aminseitengruppen.**

(57) α-Olefincopolymere mit wiederkehrenden Struktureinheiten der Formel

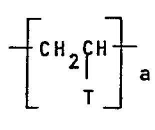
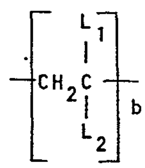
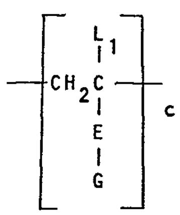

worin T vorzugsweise für Wasserstoff, $L_1$ für Wasserstoff, $L_2$ für $COOL_3$, $L_3$ für Niederalkyl, E für –COO– und G für eine sterisch gehinderte Aminfunktion stehen und a/a+b+c = 0,50 bis 0,99, b/a+b+c = 0 bis 0,49 und c/a+b+c = 0,01 bis 0,50 sind, stellen wertvolle Lichtschutzmittel für polymere Substrate, insbesondere Polyolefine dar.

EP 0 063 544 A1

3-13368/+

## α-Olefincopolymere mit sterisch gehinderten Aminseitengruppen

Vorliegende Erfindung betrifft sterisch gehinderte Aminseitengruppen enthaltende α-Olefincopolymere, die als Licht- und Wärmeschutzmittel für organische Materialien wertvoll sind, sowie solche Copolymere enthaltende stabilisierte Zusammensetzungen.

Sterisch gehinderte Aminverbindungen der 2,2,6,6-tetrasubstituierten Piperidinylstruktur sind seit langem als wirksame Lichtschutzmittel für organische Materialien bekannt und haben sich im Handel weitgehend durchgesetzt.

Derartige sterisch gehinderte Aminlichtschutzmittel wurden im einzelnen von H.J. Heller und H.R. Blattmann, Pure and Applied Chemistry, 36, 141-161 (1973) beschrieben.

Aus U.S. Patentschrift Nr. 3 705 166 ist es bekannt, dass monomere Acrylsäurederivate, die mindestens eine Piperidinylgruppe mit einem sterisch gehinderten Stickstoffatom enthalten, als Lichtschutzmittel in organischen Polymeren verwendbar sind. Diese Acrylsäurederivate sind jedoch häufig zu flüchtig.

In U.S. Patentschriften Nr. 4 210 612 und 4 294 949 sind homopolymere und gewisse copolymere Verbindungen mit sterisch gehinderten Aminseitenfunktionen als wertvolle Lichtschutzmittel beschrieben. Die Homopolymeren sind solche, die durch Radikalpolymerisation der Acryloyl- oder Methacryloylderivate von sterisch gehinderten Aminfunktionen enthaltenden Verbindungen hergestellt werden, während man die Copolymeren durch Radikalcopolymerisation von acryloyl- oder methacryloylsubstituierten, sterisch

BAD ORIGINAL

gehinderten Aminmonomeren mit anderen äthylenisch ungesättigten Monomeren wie Styrol, Alkylacrylaten, Alkylmethacrylaten, Acrylnitril, Maleinimiden oder N-Vinylpyrrolidon erhält. α-Olefine sind dabei zwar gattungsgemäss als mögliche Comonomere unter sehr unterschiedlichen äthylenisch ungesättigten Monomeren offenbart, doch werden keine Aethylencopolymeren mit sterisch gehinderten Aminseitenfunktionen beschrieben oder deren besonders vorteilhafte Eigenschaften in Erwägung gezogen.

Copolymere von acryloyl- oder methacryloylsubstituierten, sterisch gehinderten Aminmonomeren mit Acryloyl- oder Methacryloylmonomeren, die lichtabsorbierende Einheiten wie Benzophenone, Benztriazole, α-Cyancinnamate oder Benzalmalonate enthalten, werden in U.S. Patentschrift Nr. 4 276 401 als wertvolle Lichtschutzmittel für organische Materialien bezeichnet.

Gegenstand dieser Erfindung sind als Licht- und Wärmeschutzmittel für organische Materialien wertvolle α-Olefincopolymere mit sterisch gehinderten Aminseitengruppen sowie die diese Copolymeren enthaltenden stabilisierten Zusammensetzungen.

Die erfindungsgemässen α-Olefincopolymeren besitzen insbesondere im wesentlichen in statistischer Verteilung verknüpfte, wiederkehrende Struktureinheiten der Formel I

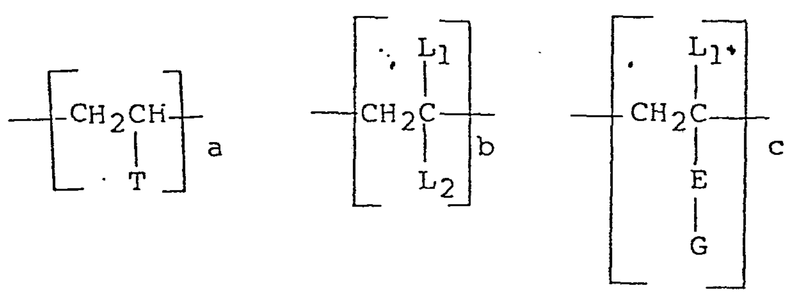

(I)

worin T für Wasserstoff, Alkyl mit 1 bis 18 Kohlenstoffatomen oder deren Gemische, $L_1$ für Wasserstoff oder Methyl, $L_2$ für Hydroxyl, $-OCOCH_3$ oder $-COOL_3$, wobei $L_3$ Wasserstoff oder Alkyl mit 1 bis 6 Kohlenstoffatomen bedeutet, und E für -COO-, -OCO-, -O- oder -CONR- stehen, wobei R Wasserstoff, Alkyl mit 1 bis 12 Kohlenstoffatomen, Aralkyl mit 7 bis 12 Kohlenstoffatomen, Cyclohexyl, Hydroxyalkyl mit 1 bis 6 Kohlenstoffatomen, Alkoxyalkyl mit 2 bis 10 Kohlenstoffatomen oder Dialkylaminoalkyl mit 3 bis 12 Kohlenstoffatomen bedeutet, und G eine einen N-heterocyclischen Ring der Formel

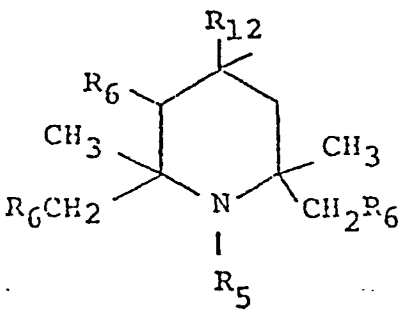
(II),

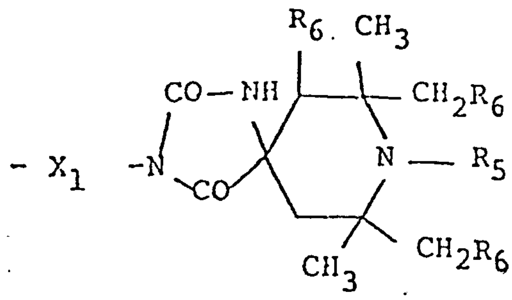
(III),

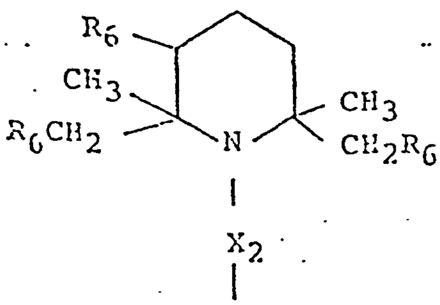
(IV),

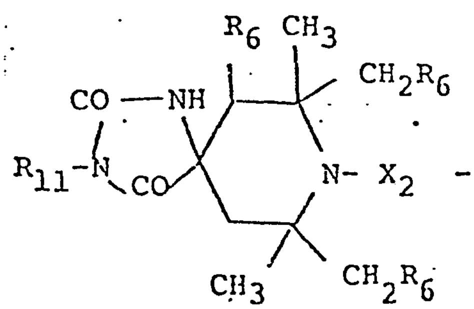
(V),

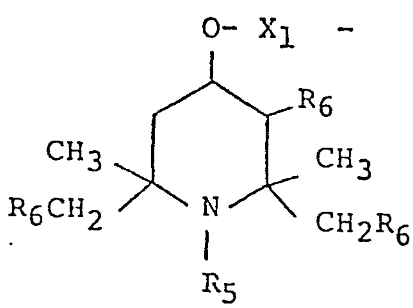

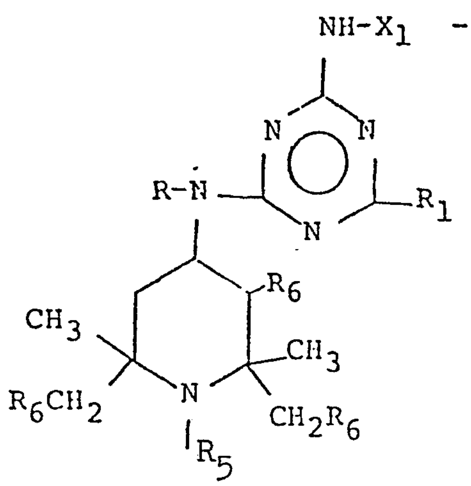

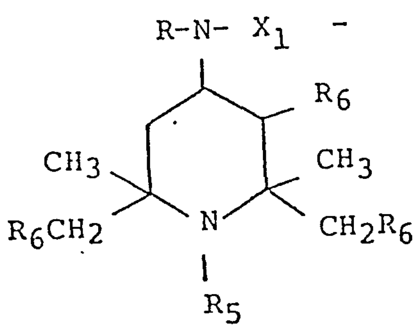

oder

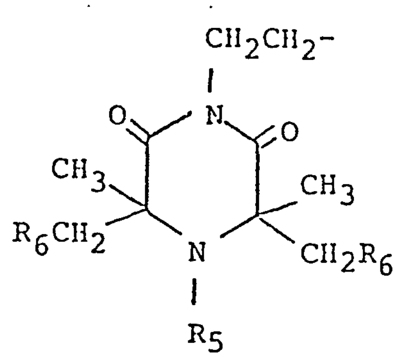

enthaltende Gruppe darstellt, worin $R_5$ für Wasserstoff, Oxyl, $C_1$-$C_{18}$-Alkyl, $C_3$-$C_8$-Alkenyl, $C_3$-$C_6$-Alkinyl, $C_7$-$C_{12}$-Aralkyl, $-CH_2CN$, $C_2$-$C_{21}$-Alkoxyalkyl, eine aliphatische Acylgruppe mit 1-4 C-Atomen oder eine der Gruppen $-CH_2COOR_7$ oder $-COOR_8$, wobei $R_7$ $C_1$-$C_{12}$-Alkyl, $C_3$-$C_8$-Alkenyl, Phenyl, $C_7$-$C_8$-Aralkyl oder Cyclohexyl und $R_8$ $C_1$-$C_{12}$-Alkyl, Phenyl, Benzyl oder Cyclohexyl bedeuten, $R_6$ für Wasserstoff oder $C_1$-$C_4$-Alkyl, $X_1$ für $C_3$-$C_{12}$-Alkylen, $-CH_2CH_2O-CH_2CH_2-$ oder eine Gruppe der Formel $-CH(R_{10})-CH_2-$ (VI), in welcher $R_{10}$ Wasserstoff, Methyl, Aethyl, Phenoxymethyl or Phenyl bedeutet, $X_2$ für eine Gruppe der Formel VI, in welcher $R_{10}$ die oben angegebene Bedeutung hat, oder eine Gruppe der Formel $-CH_2-CH(OH)-CH_2-$ (VII), $R_{11}$ für $C_1$-$C_{18}$-Alkyl oder gegebenenfalls durch $C_1$-$C_4$-Alkyl oder $C_1$-$C_4$-Alkoxy substituiertes Cyclohexyl, Phenyl oder Benzyl, $R_1$ für Alkoxy mit 1 bis 12 Kohlenstoffatomen, Phenoxy,

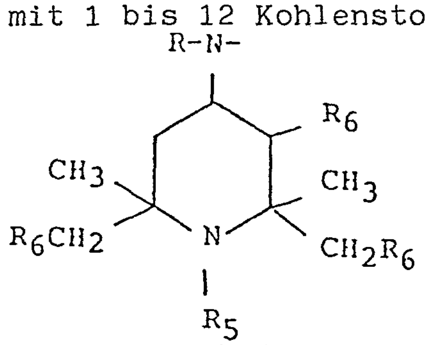

Piperidino oder $NR_2R_3$, wobei $R_2$ und $R_3$ Wasserstoff, Alkyl mit 1 bis 12 Kohlenstoffatomen, Cyclohexyl oder Benzyl bedeuten, und $R_{12}$ für Wasserstoff oder Hydroxyl stehen, mit der Massgabe, dass E -OCO- darstellt, wenn $R_{12}$ für Hydroxyl steht, wobei $a+b+c = 4$ bis 2600, $a = 2$ bis 2400, $b = 0$ bis 198, $c = 2$ bis 200, $a/a+b+c = 0{,}50$ bis $0{,}99$, $b/a+b+c = 0$ bis $0{,}49$ und $c/a+b+c = 0{,}01$ bis $0{,}50$ sind.

Die erfindungsgemässen α-Olefincopolymeren besitzen Molekulargewichte im Bereich von 500 bis 500 000, gemessen durch Gelpermeationschromatographie oder Viskosimetrie an Polymerlösungen oder Polymerschmelzen.

Die vorliegenden α-Olefincopolymeren sind aus mindestens zwei verschiedenen wiederkehrenden Struktureinheiten aufgebaut, wobei weitere unterschiedliche Struktureinheiten ebenfalls vorhanden sein können.

Als polymeres Zwischenprodukt geht man dabei von einem α-Olefincopolymer aus, vorzugsweise einem Aethylencopolymer, das zusätzlich eine zweite α-Olefinkomponente enthalten kann. Bevorzugt ist nur eine α-Olefinkomponente vorhanden.

In der Formel I stellt die erste Struktureinheit die α-Olefinkomponente dar, worin T für Wasserstoff oder Alkyl mit 1 bis 18 Kohlenstoffatomen oder auch deren Gemische steht, falls Gemische von α-Olefinen eingesetzt werden. Vorzugsweise ist T Wasserstoff, d.h. das α-Olefin ist Aethylen. Gewisse Mengen dieser Einheit liegen stets im Copolymer vor, wie daraus ersichtlich ist, dass die Molverhältniswerte für a/a+b+c eine positive Zahl von 0,50 bis 0,99 sind. Auf molarer Grundlage besteht mindestens die Hälfte der erfindungsgemässen Copolymeren jeweils aus α-Olefin.

Die zweite Struktureinheit in Formel I stellt das polare Comonomer dar, mit dem das α-Olefin, vorzugsweise Aethylen, zunächst polymerisiert wurde, bevor die sterisch gehinderte Aminseitengruppe mit der Olefincopolymerkette verknüpft wird. Dabei handelt es sich um Olefincopolymere, vorzugsweise Aethylencopolymere, mit Acrylsäure, Niederalkylacrylaten, Methacrylsäure, Niederalkylmethacrylaten oder Vinylacetat. Durch Hydrolyse des Vinylacetatcopolymers erhält man das entsprechende Vinylalkoholcopolymer. $L_1$ ist somit Wasserstoff oder Methyl, und da Acrylsäure und Niederalkylacrylate bevorzugt sind, steht $L_1$ vorzugsweise für Wasserstoff.

Im gleichen Sinn kann $L_2$ für Hydroxyl, $-OCOCH_3$ oder $-COOL_3$ stehen, wobei $L_3$ Wasserstoff oder Alkyl mit 1 bis 6 Kohlenstoffatomen bedeutet. Vorzugsweise stellt $L_2$ $-COOL_3$ dar, worin $L_3$ Alkyl mit 1 bis 6 Kohlenstoffatomen bedeutet.

Diese durch $L_2$ dargestellten, polaren funktionellen Seitengruppen liefern die Stellen, an denen nach entsprechender Veresterung, Umesterung, Amidierung oder sonstiger chemischer Umsetzung eine sterisch gehinderte Aminseitenfunktion gebunden werden kann. Vorzugsweise werden im wesentlichen sämtliche vorhandenen polaren Gruppen im $\alpha$-Olefincopolymer umgesetzt, so dass fast keine ursprünglichen polaren Gruppen im fertigen, sterisch gehinderte Aminseitenfunktionen enthaltenden Copolymerprodukt verbleiben. Dies zeigt sich in dem Molverhältnis b/a+b+c, das null sein kann bzw. vorzugsweise null ist.

Durch sorgfältige Auswahl der Einsatzmengen kann man jedoch jeden beliebigen Anteil der polaren Gruppen $L_2$ umsetzen, um die Stellung und Anzahl der sterisch gehinderten Aminseitenwirkgruppen entlang der Polymerkette im fertigen Polymerprodukt gezielt einzustellen. Dies ermöglicht die Herstellung von Copolymeren mit speziellen chemischen und physikalischen Eigenschaften für die jeweiligen Verwendungszwecke. In solchen Fällen hat das Molverhältnis b/a+b+c einen positiven Wert grösser als null bis zu 0,49.

Die dritte Struktureinheit in der Formel I stellt die mit einer sterisch gehinderten Aminfunktion verknüpften Einheiten dar. Die Gruppe E ist -COO-, -OCO-, -O- oder -CONR-, was direkt mit den Bedeutungen von $L_2$ in Beziehung steht. Vorzugsweise stellt E -COO- oder -CONRdar.

Bei der Umsetzung eines eine sterisch gehinderte Aminfunktion enthaltenden Alkohols bzw. eines solchen Amins oder einer Säure mit einem $L_2$-Seitengruppen enthaltenden Olefincopolymer nach herkömmlichen Veresterungs-, Umesterungs- oder Amidierungsmethoden werden sämtliche oder einige solche $L_2$-Gruppen durch Gruppen mit den E-G-Seitenfunktionen ersetzt. Die genaue Art von G ist nicht kritisch, ausgenommen dass es eine sterisch gehinderte Amingruppe enthalten muss. Solche Gruppen enthalten einen N-heterocyclischen Ring der Formel

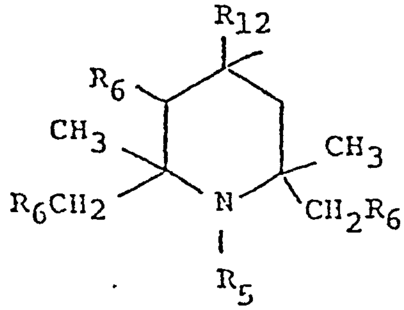

(II),

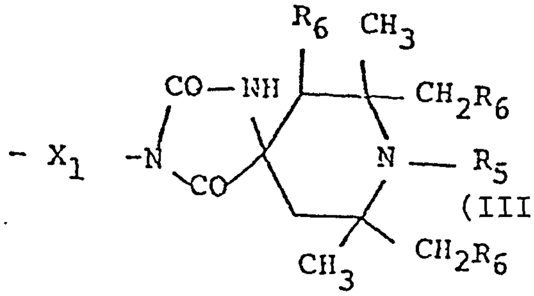

(III)

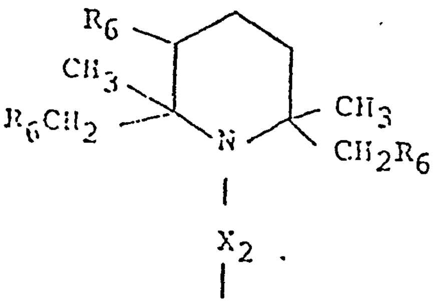

(IV),

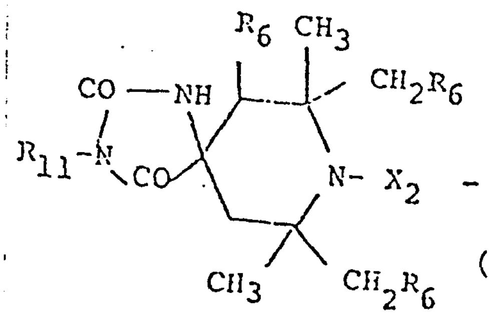

(V)

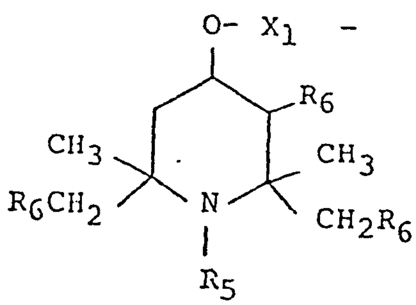

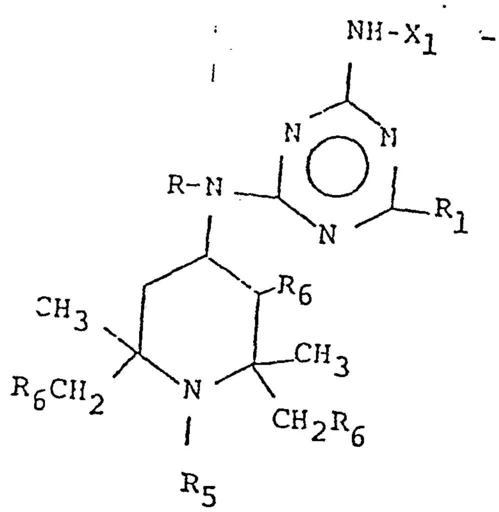

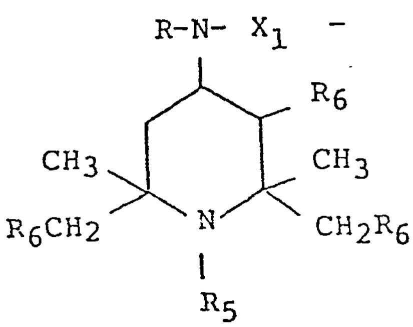

oder

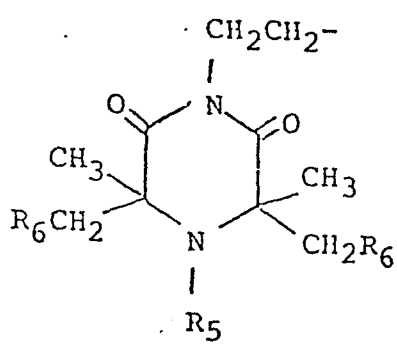

worin R für Wasserstoff, Alkyl mit 1 bis 12 Kohlenstoffatomen, Aralkyl mit 7 bis 12 Kohlenstoffatomen, Cyclohexyl, Hydroxyalkyl mit 1 bis 6 Kohlenstoffatomen, Alkoxyalkyl mit 2 bis 10 Kohlenstoffatomen oder Dialkylaminoalkyl mit 3 bis 12 Kohlenstoffatomen, vorzugsweise Wasserstoff, $R_1$

für Alkoxy mit 1 bis 12 Kohlenstoffatomen, Phenoxy,

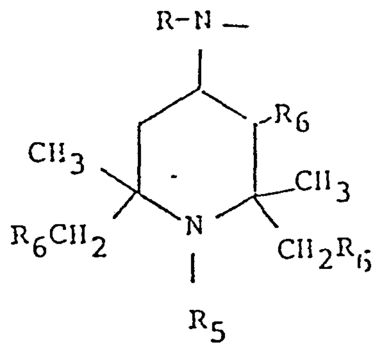

Piperidino oder $NR_2R_3$, wobei $R_2$ und $R_3$ Wasserstoff, Alkyl mit 1 bis 12 Kohlenstoffatomen, Cyclohexyl oder Benzyl bedeuten, $R_5$ für Wasserstoff, Oxyl, $C_1$-$C_{18}$-Alkyl, $C_3$-$C_8$-Alkenyl, $C_3$-$C_6$-Alkinyl, $C_7$-$C_{12}$-Aralkyl, $-CH_2CN$, $C_2$-$C_{21}$-Alkoxyalkyl, eine aliphatische Acylgruppe mit 1-4 C-Atomen oder eine der Gruppen $-CH_2COOR_7$ oder $-COOR_8$, wobei $R_7$ $C_1$-$C_{12}$-Alkyl, $C_3$-$C_8$-Alkenyl, Phenyl, $C_7$-$C_8$-Aralkyl oder Cyclohexyl und $R_8$ $C_1$-$C_{12}$-Alkyl, Phenyl, Benzyl oder Cyclohexyl bedeuten, $R_6$ für Wasserstoff oder $C_1$-$C_4$-Alkyl, $X_1$ für $C_3$-$C_{12}$-Alkylen, $-CH_2CH_2OCH_2CH_2-$ oder eine Gruppe der Formel $-CH(R_{10})-CH_2-$ (VI), in welcher $R_{10}$ Wasserstoff, Methyl, Aethyl, Phenoxymethyl oder Phenyl bedeutet, $X_2$ für eine Gruppe der Formel VI, in welcher $R_{10}$ die oben angegebene Bedeutung hat, oder eine Gruppe der Formel $-CH_2CH(OH)-CH_2-$ (VII), $R_{11}$ für $C_1$-$C_{18}$-Alkyl oder gegebenenfalls durch $C_1$-$C_4$-Alkyl oder $C_1$-$C_4$-Alkoxy substituiertes Cyclohexyl, Phenyl oder Benzyl und $R_{12}$ für Wasserstoff oder Hydroxyl stehen.

Vorzugsweise kann G für eine Gruppe der Formeln II, III, IV oder V stehen. Besonders bevorzugt ist G eine Gruppe der Formeln II oder IV mit Wasserstoff als $R_{12}$.

Als $C_1$-$C_{18}$-Alkyl steht $R_5$ beispielsweise für Methyl, Aethyl, n-Propyl, n-Butyl, n-Pentyl, n-Octyl, n-Decyl, n-Dodecyl oder Octadecyl. Bevorzugte Alkylgruppen sind solche mit 1-12 C-Atomen sowie solche mit 1-8 C-Atomen, vor allem solche mit 1-4 C-Atomen und insbesondere Methyl.

Als $C_3$-$C_8$-Alkenyl steht $R_5$ beispielsweise für

Allyl, 3-Methyl-2-butenyl, 2-Butenyl, 2-Hexenyl oder 2-Octenyl, insbesondere Allyl.

Als $C_3$-$C_6$-Alkinyl steht $R_5$ beispielsweise für Propargyl.

Als $C_7$-$C_{12}$-Aralkyl steht $R_5$ beispielsweise für Benzyl, β-Phenyläthyl oder 4-tert.-Butyl-benzyl.

Ist $R_5$ $C_2$-$C_{21}$-Alkoxyalkyl, so kann der Alkylteil 1-3 C-Atome enthalten und der Alkoxyteil aus 1-18 C-Atomen bestehen, wie z.B. Methoxymethyl, Aethoxymethyl, 2-Methoxyäthyl, 2-Aethoxyäthyl, 2-n-Butoxyäthyl, 3-n-Butoxypropyl, 2-Octoxyäthyl oder 2-Octadecyloxyäthyl, wobei solche Verbindungen bevorzugt werden, in denen $R_5$ eine Alkoxyalkylgruppe mit 2-6 C-Atomen ist.

Als aliphatische Acylgruppe mit 1-4 C-Atomen steht $R_5$ beispielsweise für Formyl, Acetyl, Acryloyl oder Crotonoyl, insbesondere Acetyl.

Als $C_1$-$C_4$-Alkyl ist $R_6$ verzweigtes oder vor allem unverzweigtes Alkyl, wie Aethyl, n-Propyl oder n-Butyl, aber insbesondere Methyl. Vorzugsweise ist $R_6$ Wasserstoff.

Als $C_1$-$C_{12}$-Alkyl steht $R_9$ beispielsweise für Methyl, Aethyl, n-Propyl, n-Butyl, n-Pentyl, n-Octyl, n-Decyl oder n-Dodecyl; vorzugsweise bedeutet $R_9$ jedoch $C_1$-$C_4$-Alkyl.

Als $C_7$-$C_{12}$-Aralkyl bedeutet $R_9$ vor allem Phenyläthyl oder insbesondere Benzyl.

$R_{10}$ bedeutet Phenyl oder Phenoxymethyl, vorzugsweise Methyl oder Aethyl und insbesondere Wasserstoff.

Als $C_1$-$C_{18}$-Alkyl steht $R_{11}$ beispielsweise für Methyl, Aethyl, Propyl, Butyl, Hexyl, Octyl, Dodecyl oder Octadecyl. Alkylgruppen mit 1-12 C-Atomen sind bevorzugt.

$R_{11}$ kann auch für Benzyl, Cyclohexyl oder Phenyl stehen, und diese können im Kern durch $C_1$-$C_4$-Alkyl wie Methyl, Aethyl, Propyl oder ein Butyl, oder durch $C_1$-$C_4$-Alkoxy, wie Methoxy, Aethoxy, Propoxy oder n-Butoxy, substituiert sein.

Ist $R_5$ eine Gruppe $-CH_2COOR_7$ oder $-COOR_8$, so bedeuten $R_7$ und $R_8$ als $C_1$-$C_{12}$-Alkyl beispielsweise Methyl,

Aethyl, Isopropyl, n-Butyl, Isobutyl, t-Butyl, Isopentyl, n-Octyl oder n-Dodecyl. Vorzugsweise sind $R_7$ und $R_8$ $C_1$-$C_4$-Alkyl. Als $C_3$-$C_8$-Alkenyl bedeutet $R_7$ beispielsweise Allyl, 2-Butenyl oder 2-Hexenyl. Als $C_7$-$C_8$-Aralkyl ist $R_7$ zum Beispiel Benzyl oder β-Phenyläthyl.

Bevorzugt werden solche Copolymere der Formel I, worin G eine Gruppe der Formeln II, III, IV oder V bedeutet, in denen $R_5$ für Wasserstoff, $C_1$-$C_{12}$-Alkyl, $C_3$-$C_5$-Alkenyl, Propargyl, $C_7$-$C_8$-Aralkyl, Acetyl oder $C_2$-$C_{10}$-Alkoxyalkyl, $R_6$ für Wasserstoff oder Methyl, E für -COO- oder -CONR-, wobei R Wasserstoff, $C_1$-$C_{12}$-Alkyl oder Benzyl bedeutet, $X_1$ für eine Gruppe der Formel VI, in welcher $R_{10}$ Wasserstoff oder Methyl bedeutet, $X_2$ für eine Gruppe der Formeln VI oder VII, in welchen $R_{10}$ die oben angegebene Bedeutung hat, $R_{11}$ für $C_1$-$C_{12}$-Alkyl oder Benzyl und $R_{12}$ für Wasserstoff stehen.

Besonders bevorzugt werden solche Copolymere der Formel I, in denen G eine Gruppe der Formeln II oder IV darstellt, worin $R_5$ für Wasserstoff, $C_1$-$C_8$-Alkyl, Benzyl oder Acetyl, $R_6$ für Wasserstoff oder Methyl, E für -COO- oder -CONR-, wobei R Wasserstoff oder $C_1$-$C_8$-Alkyl bedeutet, $X_2$ für eine Gruppe der Formeln VI oder VII, in welchen $R_{10}$ Wasserstoff, Methyl oder Aethyl bedeutet, und $R_{12}$ für Wasserstoff stehen.

Weitere bevorzugte Copolymere der Formel I sind solche, in denen G eine Gruppe der Formeln II oder IV darstellt, worin $R_5$ für Wasserstoff, $C_1$-$C_4$-Alkyl, Benzyl oder Acetyl, $R_6$ für Wasserstoff, E für -COO- oder -CONR-, wobei R Wasserstoff oder $C_1$-$C_4$-Alkyl bedeutet, $X_2$ für eine Gruppe der Formeln VI oder VII, in welchen $R_{10}$ Wasserstoff oder Methyl bedeutet, und $R_{12}$ für Wasserstoff stehen.

Ganz besonders bevorzugte Verbindungen sind Aethylencopolymere der Formel I, in denen G eine Gruppe der Formeln II oder IV darstellt, worin $R_5$ für Wasserstoff, Methyl oder Acetyl, $R_6$ für Wasserstoff, E für -COO- oder -CONR-, wobei R Wasserstoff oder $C_1$-$C_4$-Alkyl bedeutet, $X_2$ für eine Gruppe der Formeln VI oder VII, in welchen $R_{10}$

Wasserstoff bedeutet, und $R_{12}$ für Wasserstoff stehen.

Ein gewisser Anteil dieser dritten Struktureinheit ist stets im erfindungsgemässen Copolymeren vorhanden, wie daraus ersichtlich ist, dass die Molverhältniswerte für c/a+b+c eine positive Zahl von 0,01 bis 0,50 sind.

Besonders bevorzugt sind die Copolymeren, in denen -E-G

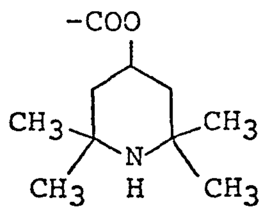

darstellt.

Das Molekulargewicht der vorliegenden Olefincopolymeren liegt im Bereich von etwa 500 bis etwa 500 000. Die Werte von a+b+c betragen 4 bis 2600.

Das Molekulargewicht der vorliegenden α-Olefincopolymeren mit sterisch gehinderten Aminseitengruppen kann zwar im Bereich von im wesentlichen oligomeren Strukturen mit einem Molekulargewicht von etwa 500 bis zu hochpolymeren Materialien mit einem Molekulargewicht bis 500 000 liegen, doch beträgt der bevorzugte Molekulargewichtsbereich 5 000 bis 100 000 und besonders bevorzugt 10 000 bis 50 000. Diese Bereiche entsprechen im wesentlichen Werten von a+b+c von 40 bis 520 bzw. 80 bis 260.

α-Olefincopolymere wie Aethylen/Aethylacrylat, Aethylen/Methylacrylat, Aethylen/Methylacrylat/Acrylsäure, Aethylen/Vinylacetat, Aethylen/Vinylalkohol und dergleichen sind Handelswaren, wobei Copolymere mit verschiedenen Molekulargewichten (Schmelzindex) und Gewichtsprozenten Aethylacrylat oder anderen Comonomeren erhältlich sind.

Die Radikalpolymerisation von Aethylen oder anderen Olefinmonomeren mit verschiedenen polaren Comonomeren ist dem Fachmann bekannt, und eine angemessene Auswahl von Olefincopolymerzwischenprodukten als Ausgangsmaterial steht somit zur Verfügung.

Erfindungsgemäss verwendbare, sterisch gehinderte Aminalkohole und Amine sind unter anderem beispielsweise

1-(2-Hydroxyaethyl)-2,2,6,6-tetramethylpiperidin, 1,2,2,6,6-Pentamethyl-4-aminopiperidin, 1-Acetyl-2,2,6,6-tetramethyl-4-aminopiperidin, 1-Benzyl-2,2,6,6-tetramethyl-4-aminopiperidin, 1,3,8-Triaza-2,4-dioxo-3-(2-hydroxyäthyl)-7,7,8,9,9-pentamethylspiro[4.5]decan, 1,3,8-Triaza-2,4-dioxo-3-n-dodecyl-7,7,9,9-tetramethyl-8-(2-hydroxyäthyl)-spiro[4.5]decan, 1,3,8-Triaza-2,4-dioxo-3-(2-hydroxyäthyl)-7,7,9,9-tetramethyl-8-benzylspiro[4.5]decan, 1,3,8-Triaza-2,4-dioxo-3-n-butyl-7,7,9,9-tetramethyl-8-(2-hydroxyäthyl)-spiro[4.5]decan, 1-Benzyl-2,2,6,6-tetramethyl-4-(N-n-butyl)-aminopiperidin, 1,2,2,6,6-Pentamethyl-4-(N-benzyl)-aminopiperidin, 1,2,2,6,6-Pentamethyl-4-(N-n-propyl)-aminopiperidin, 1-Allyl-2,2,6,6-tetramethyl-4-hydroxypiperidin und 1-(2,3-Dihydroxypropyl)-2,2,6,6-tetramethylpiperidin.

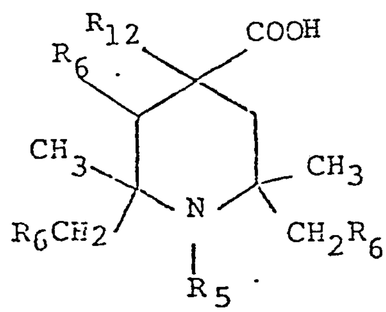

ist eine typische, eine sterisch gehinderte Aminogruppe enthaltende Säure. Eine solche Säure lässt sich nach herkömmlichen Veresterungs- oder Umesterungsmethoden mit einem Olefin/Vinylalkohol- oder Olefin/Vinylacetatcopolymer verknüpfen.

Sterisch gehinderte Amingruppen enthaltende Alkohole, Amine und Säuren sind dem Fachmann wohlbekannt.

Die als Reaktionspartner eingesetzten Piperidinylderivate sind ebenfalls bekannte Verbindungen. Die Herstellung der Verbindungen der Formel XI

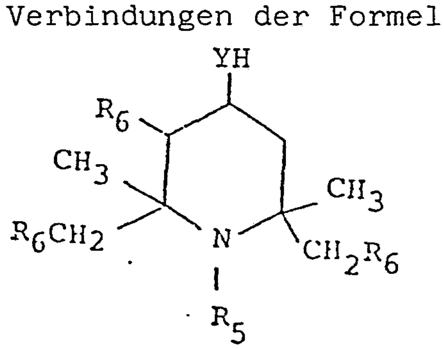

(XI)

worin Y für -O- bzw. -NR- steht, wurde zum Beispiel in U.S. Patentschrift Nr. 4 014 887 (4-Hydroxypiperidine) bzw. 3 684 765 (4-Aminopiperidine) beschrieben.

Verbindungen der Formeln XII und XIV

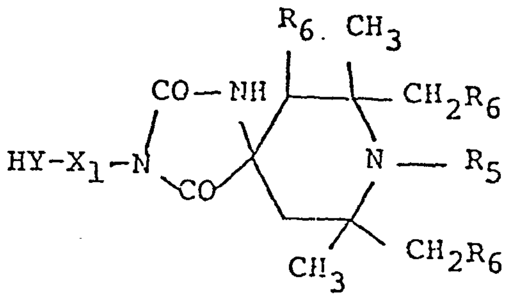

(XII)

und

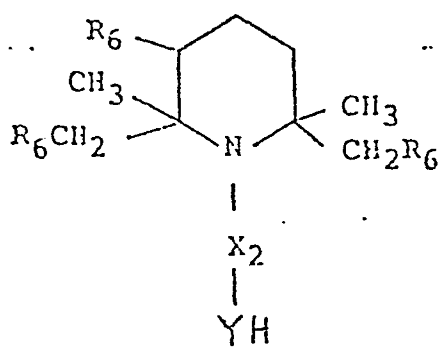

(XIV)

lassen sich analog den in U.S. Patentschrift Nr. 3 942 744 beschriebenen Methoden herstellen.

Die Herstellung von Verbindungen der Formel XIII

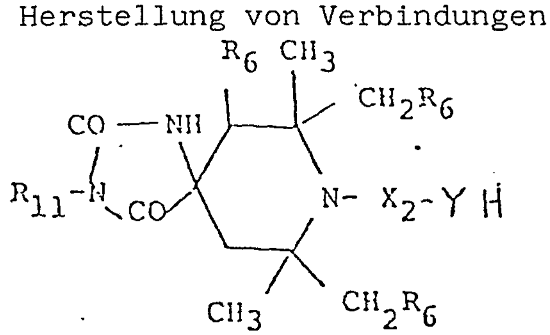

(XIII)

ist beispielsweise aus U.S. Patentschrift Nr. 3 975 357 bekannt.

Verbindungen der Formel XI, XII, XIII und XIV mit verschiedenen Substituenten in der 2-Stellung und 6-Stellung des Piperidylrings sind durch Umsetzung eines Ketons der Formel $CH_3$-CO-$CH_2$-$R_6$ mit Ammoniak herstellbar. Das dabei gebildete Pyrimidin wird wie in Helv. Chim. Acta 30,

114 (1947) beschrieben zu einem Aminoketon der Formel XV hydrolisiert.

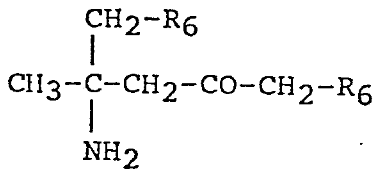

(XV)

In einer zweiten Verfahrensstufe setzt man die Verbindungen der Formel XV mit Ammoniak und einem Keton $CH_3$-CO-$CH_2$-$R_6$ um, wie beispielsweise in Monatsh. Chemie, 88, (1957) 464 beschrieben, (in den gezeigten Formeln hat $R_6$ die oben angegebene Bedeutung). Verbindungen der Formeln XI und XII, worin $R_5$ für Wasserstoff steht, sind durch Hydrolyse aus dem so gebildeten Pyrimidin erhältlich.

Verbindungen mit von Wasserstoff verschiedenen Substituenten in der 1- und/oder 4-Stellung werden analog den in den oben genannten Literaturstellen beschriebenen Methoden hergestellt.

Während die erfindungsgemässen Copolymeren, wie sterisch gehinderte Amine ganz allgemein, sehr wirksame Stabilisatoren für eine grosse Zahl organischer, lichtinduziertem Abbau unterliegender Substrate darstellen, besitzen die vorliegenden Verbindungen mit ihrer überraschenden Widerstandsfähigkeit gegen durch Verflüchtigung, Ausschwitzen oder Sublimation bedingten Schwund aus einer stabilisierten Zusammensetzung während der Verarbeitung bei hohen Temperaturen einen besonderen Wert bei der Stabilisierung von polymeren Substraten, die zwangsläufig bei erhöhten Temperaturen verarbeitet werden.

Die erfindungsgemässen Copolymeren sind besonders wertvoll als Stabilisatoren zum Schutz von Polyolefinen, insbesondere Polyäthylen, Polypropylen sowie Polypropylenfasern.

Die Ursachen dafür sind nicht klar, doch kann dies mit der hohen Verträglichkeit der vorliegenden Olefincopolymeren, insbesondere Aethylencopolymeren, mit den Polyolefinsubstraten sowie erhöhter oder wirksamerer Ausnutzung der polaren, sterisch gehinderten Aminstabilisatorwirkgruppen zusammenhängen.

Es lässt sich dabei in Erwägung ziehen, dass die Struktur der vorliegenden Aethylencopolymeren ein ausgewogenes Optimum zwischen Aethyleneinheiten für Verträglichkeit und gesonderten polaren Einheiten mit sterisch gehinderten Aminseitengruppen für Stabilisationswirksamkeit ergeben. Die vorliegenden Copolymeren, die eine grössere Anzahl Aethyleneinheiten entlang dem Copolymerrückgrat mit einer kleineren Anzahl seitenständigen, sterisch gehinderte Amingruppen enthaltenden Strucktureinheiten enthalten scheinen eine wirksamere Ausnutzung der sterisch gehinderten Aminfunktionen zu ermöglichen, deren unerwünschte Anhäufung im Polyolefinsubstrat zu verhindern und zu einem Stabilisationsschutz zu führen, der weit hinausgeht über das, was man von derselben Gesamtstabilisatorkonzentration ohne Aethylenkomponenten erwarten würde. Tatsächlich sind die vorliegenden Copolymeren sogar mit weniger als 10 Molprozent Einheiten mit sterisch gehinderten Aminseitengruppen sehr wirksame Lichtschutzmittel in Polyolefinsubstraten.

Die erfindungsgemässen Copolymeren sind wirksame Lichtschutzmittel für eine grosse Anzahl organischer Polymerer. Stabilisierbare Polymere sind dabei unter anderem:

1. Sich von Mono- oder Diolefinen ableitende Polymere, z.B. gegebenenfalls vernetztes Polyäthylen, Polypropylen, Polyisobutylen, Polymethylbuten-1, Polymethylpenten-1, Polyisopren und Polybutadien.

2. Gemische aus den unter 1) genannten Homopolymeren, beispielsweise Gemische aus Polypropylen und Polyäthylen, Polypropylen und Polybuten-1 sowie Polypropylen und Polyisobutylen.

3. Copolymere auf Grundlage der Monomeren der unter 1) genannten Homopolymeren, beispielsweise Aethylen/Propylencopolymere, Propylen/Buten-1-copolymere, Propylen/Isobutylencopolymere, Aethylen/Buten-1-copolymere sowie Terpolymere aus Aethylen und Propylen mit einem Dien, z.B.

Hexadien, Dicyclopentadien oder Aethylidennorbornen, und Copolymere von $\alpha$-Olefinen, z.B. Aethylen mit Acryl- oder Methacrylsäure.

4. Polystyrol.

5. Copolymere des Styrols und $\alpha$-Methylstyrols, beispielsweise Styrol/Butadiencopolymere, Styrol/Acrylnitrilcopolymere, Styrol/Acrylnitril/Methacrylatcopolymere, durch Modifikation mit Acrylesterpolymeren schlagzäh gemachte Styrol/Acrylnitrilcopolymere, und auch Blockcopolymere, z.B. Styrol/Butadien/Styrolblockcopolymere.

6. Propfcopolymere des Styrols, zum Beispiel ein Propfpolymer von Styrol auf Polybutadien, Styrol mit Acrylnitril auf Polybutadien, sowie deren Gemische mit den unter 5) genannten, allgemein als Acrylnitril/Butadien/Styrol bzw. ABS-Kunststoffe bezeichneten Copolymeren.

7. Halogenhaltige Vinylpolymere, beispielsweise Polyvinylchlorid, Polyvinylidenchlorid, Polyvinylfluorid, Polychloropren, chlorierter Kautschuk, Vinylchlorid/Vinylidenchloridcopolymere, Vinylchlorid/Vinylacetatcopolymere und Vinylidenchlorid/Vinylacetatcopolymere.

8. Sich von $\alpha,\beta$-ungesättigten Säuren ableitende Polymere und deren Derivate, wie Polyacrylate und Polymethacrylate, Polyacrylamide und Polyacrylnitril.

9. Sich von ungesättigten Alkoholen und Aminen sowie deren Acylderivaten oder Acetalen ableitende Polymere, beispielsweise Polyvinylalkohol, Polyvinylacetat, Polyvinylstearat, Polyvinylbenzoat, Polyvinylmaleinat, Polyvinylbutyral, Polyallylphthalat, Polyallylmelamin und deren Copolymere mit anderen Vinylverbindungen, zum Beispiel Aethylen/Vinylacetatcopolymere.

10. Sich von Epoxiden ableitende Homopolymere und Copolymere, beispielsweise Polyäthylenoxyd oder von Bisglycidyläthern abgeleitete Polymere.

11. Polyacetale, beispielsweise Polyoxymethylen, sowie Aethylenoxyd als Comonomer enthaltende Polyoxymethylene.

12. Polyalkylenoxyde, beispielsweise Polyoxyäthylen,

Polypropylenoxyd oder Polybutylenoxyd.

13. Polyphenylenoxyde.

14. Polyurethane und Polyharnstoffe, wie in Urethanüberzügen.

15. Polycarbonate.

16. Polysulfone.

17. Sich von Diaminen und Dicarbonsäuren und/oder Aminocarbonsäuren oder den entsprechenden Lactamen ableitende Polyamide und Copolyamide, beispielsweise Polyamid-6, Polyamid-6/6, Polyamid-6/10, Polyamid-11, Polyamid-12 und Poly-m-phenylen-isophthalamid.

18. Sich von Dicarbonsäuren und Dialkoholen und/oder Hydroxycarbonsäuren oder den entsprechenden Lactonen ableitende Polyester, beispielsweise Polyäthylenglykolterephthalat und Poly-1,4-dimethylol-cyclohexanterephthalat.

19. Sich einerseits von Aldehyden und andererseits Phenolen, Harnstoffen und Melamin ableitende vernetzte Polymere, beispielsweise Phenol/Formaldehyd-, Harnstoff/Formaldehyd- und Melamin/Formaldehydharze.

20. Alkydharze, beispielsweise Glycerin/Phthalsäureharze und deren Gemische mit Melamin/Formaldehydharzen.

21. Sich von Copolyestern gesättigter und ungesättigter Dicarbonsäuren mit mehrwertigen Alkoholen sowie Vinylverbindungen als Vernetzungsmittel ableitende, ungesättigte Polyesterharze, sowie deren halogenhaltige, flammwidrige Modifikationen.

22. Natürliche Polymere, beispielsweise Cellulose, Kautschuk sowie deren chemisch modifizierte, homologe Derivate, beispielsweise Celluloseacetate, Cellulosepropionate und Cellulosebutyrate sowie Celluloseäther, zum Beispiel Methylcellulose.

Die Stabilisierung von Polyolefinen, Styrolpolymeren und Polyamiden sowie Polyurethanen ist von besonderer Bedeutung, und die vorliegenden Copolymeren sind dafür ausgezeichnet geeignet. Beispiele für solche Polymere sind Polyäthylen hoher und niedriger Dichte, Polypropylen,

Aethylen/Propylencopolymere, Polystyrol, Styrol/Butadien/ Acrylnitrilterpolymere, Gemische von Polyolefinen oder Styrolpolymeren sowie Polyurethane auf Grundlage von Polyäthern oder Polyestern, in Form von Lacken, Fäden, Filmen, Folien, Elastomeren und Schäumen.

Die copolymeren Stabilisatoren werden den Kunststoffen in einer Konzentration von 0,05 bis 5 Gew.-%, berechnet auf das zu stabilisierende Material, zugesetzt. Vorzugsweise werden 0,1 bis 2,5 Gew.-% der Copolymeren, berechnet auf das zu stabilisierende Material, in dieses eingearbeitet.

Auch kann man die neuartigen Copolymeren in Form einer konzentrierten Vormischung, welche diese beispielsweise in einer Konzentration von 2,5 bis 25 Gew.-% enthält, den zu stabilisierenden Kunststoffen zusetzen.

Obwohl die erfindungsgemässen Verbindungen vor allem dazu dienen sollen, eine Lichtschutzfunktion auszuüben, werden diese bei der Herstellung stabilisierter Zusammensetzungen häufig mit anderen Stabilisatoren, sogar anderen Lichtschutzmitteln, kombiniert. Die Stabilisatoren sind zusammen mit phenolischen Antioxydantien, Pigmenten, Färbemitteln oder Farbstoffen, Lichtschutzmitteln wie sterisch gehinderten Aminen, Metalldesaktivatoren usw. verwendbar.

Die Stabilisatoren der Formel I lassen sich leicht in organische Polymere nach herkömmlichen Methoden während irgendeiner zweckmässigen Stufe vor der Herstellung von Formteilen daraus einarbeiten. Beispielsweise kann man den Stabilisator in trockener Pulverform mit dem Polymer vermischen oder eine Suspension oder Emulsion des Stabilisators mit einer Lösung, Suspension oder Emulsion des Polymeren vermischen. Gegebenenfalls können die erfindungsgemässen, stabilisierten Polymerzusammensetzungen ferner etwa 0,05 bis etwa 5 Gew.-%, vorzugsweise etwa 0,1 bis etwa 2,5 Gew.-%, verschiedener üblicher Zusatzstoffe wie den folgenden, insbesondere phenolische Antioxydantien oder Lichtschutzmittel bzw. deren Gemische, enthalten:

1. Antioxydantien

1.1 Einfache 2,6-Dialkylphenole wie z.B. 2,6-Di-tert.-butyl-4-methylphenol, 2-tert.-Butyl-4,6-dimethylphenol, 2,6-Di-tert.-butyl-4-methoxymethylphenol und 2,6-Dioctadecyl-4-methylphenol.

1.2 Derivate alkylierter Hydrochinone wie z.B. 2,5-Di-tert.-butyl-hydrochinon, 2,5-Di-tert.-amyl-hydrochinon, 2,6-Di-tert.-butyl-hydrochinon, 2,5-Di-tert.-butyl-4-hydroxy-anisol, 3,5-Di-tert.-butyl-4-hydroxy-anisol, 3,5-Di-tert.-butyl-4-hydroxyphenylstearat und Bis-(3,5-di-tert.-butyl-4-hydroxyphenyl)-adipat.

1.3 Hydroxylierte Thiodiphenyläther wie z.B. 2,2'-Thio-bis-(6-tert.-butyl-4-methylphenol), 2,2'-Thio-bis-(4-octylphenol), 4,4'-Thio-bis-(tert.-butyl-3-methylphenol), 4,4'-Thio-bis-(3,6-di-sek.-amylphenol), 4,4'-Thio-bis-(6-tert.-butyl-2-methylphenol) und 4,4'-Bis-(2,6-dimethyl-4-hydroxyphenyl)-disulfid.

1.4 Alkyliden-bisphenole wie z.B. 2,2'-Methylen-bis-(6-tert.-butyl-4-methylphenol), 2,2'-Methylen-bis-(6-tert.-butyl-4-äthylphenol), 4,4'-Methylen-bis-(6-tert.-butyl-2-methylphenol), 4,4'-Methylen-bis-(2,6-di-tert.-butylphenol), 2,6-Di-(3-tert.-butyl-5-methyl-2-hydroxybenzyl)-4-methylphenol, 2,2'-Methylen-bis-[4-methyl-6-( -methylcyclohexyl)-phenol], 1,1-Bis-(3,5-dimethyl-2-hydroxyphenyl)-butan, 1,1-Bis-(5-tert.-butyl-4-hydroxy-2-methylphenyl)-butan, 2,2-Bis-(3,5-di-tert.-butyl-4-hydroxyphenyl)-propan, 1,1,3-Tris-(5-tert.-butyl-4-hydroxy-2-methylphenyl)-butan, 2,2-Bis-(5-tert.-butyl-4-hydroxy-2-methylphenyl)-4-n-dodecylmercapto-butan, 1,1,5,5-Tetra-(5-tert.-butyl-4-hydroxy-2-methylphenyl)-pentan und Aethylenglykol-bis-[3,3-bis-(3-tert.-butyl-4-hydroxyphenyl)-butyrat].

1.5 O-, N- und S-Benzylverbindungen wie z.B. 3,5,3',5'-Tetra-tert.-butyl-4,4'-dihydroxydibenzyläther, Octadecyl-4-hydroxy-3,5-dimethylbenzyl-mercaptoacetat, Tris-(3,5-di-tert.-butyl-4-hydroxybenzyl)-amin und Bis-(4-tert.-butyl-3-hydroxy-2,6-dimethylbenzyl)-dithioterephthalat.

1.6 Hydroxybenzylierte Malonate wie z.B. Dioctadecyl-2,2-bis-(3,5-di-tert.-butyl-2-hydroxybenzyl)-malonat, Dioctadecyl-2-(3-tert.-butyl-4-hydroxy-5-methylbenzyl)-malonat, Di-dodecylmercapto-äthyl-2,2-bis-(3,5-di-tert.-butyl-4-hydroxybenzyl)-malonat und Di-[4-(1,1,3,3-tetramethylbutyl)-phenyl]-2,2-bis-(3,5-di-tert.-butyl-4-hydroxybenzyl)-malonat.

1.7 Hydroxybenzylaromatische Verbindungen wie z.B. 1,3,5-Tri-(3,5-di-tert.-butyl-4-hydroxybenzyl)-2,4,6-trimethylbenzol, 1,4-Di-(3,5-di-tert.-butyl-4-hydroxybenzyl)-2,3,5,6-tetramethylbenzol und 2,4,6-Tris-(3,5-di-tert.-butyl-4-hydroxybenzyl)-phenol.

1.8 s-Triazinverbindungen wie z.B. 2,4-Bis-octylmercapto-6-(3,5-di-tert.-butyl-4-hydroxyanilino)-s-triazin, 2-Octylmercapto-4,6-bis-(3,5-di-tert.-butyl-4-hydroxyanilino)-s-triazin, 2-Octylmercapto-4,6-bis-(3,5-di-tert.-butyl-4-hydroxyphenoxy)-s-triazin, 2,4,6-Tris-(3,5-di-tert.-butyl-4-hydroxyphenoxy)-s-triazin, 2,4,6-Tris-(3,5-di-tert.-butyl-4-hydroxyphenyläthyl)-s-triazin und 1,3,5-Tris-(3,5-di-tert.-butyl-4-hydroxybenzyl)-isocyanurat.

1.9 Amide von β-(3,5-Di-tert.-butyl-4-hydroxyphenyl)-propionsäuren wie z.B. 1,3,5-Tris-(3,5-di-tert.-butyl-4-hydroxyphenyl-propionyl)-hexahydro-s-triazin, N,N'-Di-(3,5-di-tert.-butyl-4-hydroxyphenyl-propionyl)-hexamethylendiamin und N,N'-Bis-β-(3,5-di-t-butyl-4-hydroxyphenyl)-propionyl-hydrazin.

1.10 Ester der β-(3,5-Di-tert.-butyl-4-hydroxyphenyl)-propionsäure mit einwertigen oder mehrwertigen Alkoholen wie z.B. mit Methanol, Aethanol, Octadecanol, 1,6-Hexandiol, 1,9-Nonandiol, Aethylenglykol, 1,2-Propan-diol, Diäthylenglykol, Thiodiäthylenglykol, Neopentylglykol, Pentaerythrit, 3-Thiaundecanol, 3-Thiapentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo[2.2.2]octan.

1.11 Ester der β-(5-tert.-Butyl-4-hydroxy-3-methylphenyl)-propionsäure mit einwertigen oder mehrwertigen Alkoholen wie z.B. mit Methanol, Aethanol, Octadecanol, 1,6-Hexandiol, 1,9-Nonandiol, Aethylenglykol, 1,2-Propan-diol, Diäthylenglykol, Thiodiäthylenglykol, Neopentylglykol, Pentaerythrit, 3-Thiaundecanol, 3-Thiapentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo[2.2.2]octan.

1.12 Ester der 3,5-Di-tert.-butyl-4-hydroxyphenylessigsäure mit einwertigen oder mehrwertigen Alkoholen wie z.B. mit Methanol, Aethanol, Octadecanol, 1,6-Hexandiol, 1,9-Nonandiol, Aethylenglykol, 1,2-Propandiol, Diäthylenglykol, Thiodiäthylenglykol, Neopentylglykol, Pentaerythrit, 3-Thiaundecanol, 3-Thiapentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo[2.2.2]octan, insbesondere der Tetrakis-ester des Pentaerythrits.

1.13 Benzylphosphonate wie z.B. Dimethyl-3,5-di-tert.-butyl-4-hydroxybenzylphosphonat, Diäthyl-3,5-di-tert.-butyl-4-hydroxybenzylphosphonat, Dioctadecyl-3,5-di-tert.-butyl-4-hydroxybenzylphosphonat und Dioctadecyl-5-tert.-butyl-4-hydroxy-3-methylbenzylphosphonat.

2. Lichtschutzmittel

2.1 Ester gegebenenfalls substituierter Benzoesäuren z.B. der 2,4-Di-tert.-butylphenyl-, Octadecyl- oder 2-Methyl-4,6-di-tert.-butylphenylester der 3,5-Di-tert.-butyl-4-hydroxybenzoesäure.

2.2 Sterisch gehinderte Amine z.B. 4-Benzoyl-2,2,6,6-tetramethylpiperidin, 4-Stearyloxy-2,2,6,6-tetramethylpiperidin, Bis-(2,2,6,6-tetramethylpiperidyl)-sebacinat, Bis-(1,2,2,6,6-pentamethylpiperidyl)-sebacinat, Bis-(1,2,2,6,6-pentamethylpiperidyl)-2-n-butyl-2-(2-hydroxy-3,5-di-tert.-butyl-benzyl)-malonat oder 3-n-Octyl-7,7,9,9-tetramethyl-1,3,8-triazaspiro[4.5]decan-2,4-dion.

2.3 Oxalsäurediamide z.B. 4,4'-Di-octyloxy-oxanilid, 2,2'-Di-octyloxy-5,5'-di-tert.-butyl-oxanilid, 2,2'-Di-dodecyloxy-5,5'-di-tert.-butyl-oxanilid, 2-Aethoxy-2'-äthyl-oxanilid, N,N'-Bis-(3-dimethylaminopropyl)-oxalamid, 2-Aethoxy-5-tert.-butyl-2'-äthyl-oxanilid und dessen Gemisch mit 2-Aethoxy-2'-äthyl-5,4'-di-tert.-butyl-oxanilid oder ein Gemisch aus ortho- und para-methoxy- sowie o-und p-äthoxydisubstituierten Oxaniliden.

3. Metalldesaktivatoren z.B. Oxanilid, Isophthalsäuredihydrazid, Sebacinsäure-bis-phenylhydrazid, Bis-benzylidenoxalsäuredihydrazid, N,N'-Diacetal-adipinsäuredihydrazid, N,N'-Bis-salicyloyl-oxalsäuredihydrazid, N,N'-Bis-salicyloylhydrazin, N,N'-Bis-(3,5-di-tert.-butyl-4-hydroxyphenylpropionyl)-hydrazin, N-Salicyloyl-N'-salicylalhydrazin, 3-Salicyloylamino-1,2,4-triazol oder N,N'-Bis-salicyloylthiopropionsäuredihydrazid.

4. Basische Costabilisatoren z.B. Alkali- und Erdalkalisalze höherer Fettsäuren, beispielsweise Ca-Stearat, Zn-Stearat, Mg-Behenat, Na-Ricinoleat oder K-Palmitat.

5. Nukleierungsmittel z.B. 4-tert.-Butylbenzoesäure, Adipinsäure oder Diphenylessigsäure.

6. Phosphite und Phosphonite wie z.B. Triphenylphosphit, Diphenylalkylphosphite, Phenyldialkylphosphite, Tri-(nonylphenyl)-phosphit, Trilaurylphosphit, Trioctadecylphosphit, 3,9-Isodecyloxy-2,4,8,10-tetraoxa-3,9-diphospha[5.5]undecan und Tetra-(2,4-di-tert.-butylphenyl)-diphenylen-4,4'-bis-(phosphonit).

Weitere gegebenenfalls in die stabilisierten Zusammensetzungen eingearbeitete Zusätze sind Thiosynergisten

wie Dilauryl-thiodipropionat, Gleitmittel wie Stearylalkohol, Füllstoffe, Asbest, Kaolin, Talk, Glasfasern, Pigmente, optische Aufheller, Flammschutzmittel und Antistatika.

Während die vorliegenden, sterisch gehinderte Aminseitenfunktionen G enthaltenden Copolymeren besonders wertvoll als Stabilisatoren für polymere Substrate sind, ist auch in Betracht zu ziehen, dass diese Copolymeren Anfärbestellen für die nachfolgende Färbung des stabilisierten Polymers mit Säurefarbstoffen liefern würden. Wegen des Einbaus der basischen, sterisch gehinderten Aminstelle in die Polyolefinfaser wäre dies besonders nützlich beim Färben von Polyolefinen wie Polypropylen.

Die nachfolgenden Beispiele dienen nur zur Erläuterung und sind nicht so auszulegen, als dass sie die Art oder den Umfang der vorliegenden Erfindung in irgendwelcher Weise einschränken würden.

## BEISPIEL 1

### Aethylen/2,2,6,6-Tetramethylpiperidin-4-ylacrylat-copolymer

In einen mit Rührer, Rückflusskühler, Thermometer, Stickstoffeinlassrohr und Oelbad versehenen 500 ml-Dreihalsrundkolben gibt man ein Gemisch aus 14,5 g Aethylen/Aethylacrylatcopolymer (77/23) mit einem Molekulargewicht von 28 000 im Zahlenmittel und einem Aethylacrylatgehalt von 23 Gew.-% (= 0,033 Mol Aethylacrylat), 15,7 g (0,1 Mol) 2,2,6,6-Tetramethylpiperidin-4-ol und 0,3 g Tetrabutyltitanat. Man erhitzt unter Stickstoff 20 Stunden lang unter langsamem Rühren bei 175°C.

Bei der Umesterungsreaktion wird die quantitative Menge (0,033 Mol, 1,52 g) Aethanol freigesetzt und in einer geeigneten Kühlfalle mittels eines Aceton/Trockeneisbads aufgefangen.

Das so erhaltene Copolymerprodukt löst man dann in 150 ml wasserfreiem Toluol und gibt die Toluollösung anschliessend tropfenweise zur Fällung des Copolymers in überschüssiges wasserfreies Hexan. Das Copolymer wird durch Abfiltrieren gewonnen und dann unter Rückfluss in

Aceton suspendiert, um etwa nicht umgesetztes 2,2,6,6-Tetramethylpiperidin-4-ol zu extrahieren. Das erwünschte, extrahierte und gereinigte Polymer wird durch Abfiltrieren gewonnen und bei 50°C/0,2 Torr 7 Stunden getrocknet. Man erhält das gewünschte Copolymer in 15,5 g Ausbeute (95%).

Analyse:

Berechnet (%) C: 79,02; H: 12,55; N: 2,57.

Gefunden (%) C: 79,94; H: 12,01; N: 2,08.

BEISPIEL 1a

Verfährt man wie in Beispiel 1, jedoch unter Verwendung von nur 3,15 g (0,02 Mol) 2,2,6,6-Tetramethylpiperidin-4-ol, d.h. 0,6 Moläquivalent 2,2,6,6-Tetramethylpiperidin-4-ol anstatt 3 Moläquivalenten pro Esterseitengruppe im Aethylen/Aethylacrylatcopolymer (77/23), so erhält man ein Produkt, in welchem ungefähr die Hälfte der Aethylesterseitengruppen durch sterisch gehinderte Aminfunktionen ersetzt sind. Das Produkt enthält 1,12% Stickstoff.

BEISPIEL 2

Aethylen/2,2,6,6-Tetramethylpiperidin-4-ylacrylat-copolymer

Das oben genannte Copolymer stellt man gemäss der allgemeinen Arbeitsweise von Beispiel 1 her, unter Verwendung einer äquivalenten Menge eines Aethylen/Aethylacrylatcopolymers (82/18) mit einem Molekulargewicht von 33 000 im Zahlenmittel und einem Aethylacrylatgehalt von 18 Gew.-%.

Analyse:

Berechnet (%) C: 80,10; H: 13,02; N: 2,10.

Gefunden (%) C: 80,38; H: 12,85; N: 1,78.

BEISPIEL 3

Aethylen/2,2,6,6-Tetramethylpiperidin-4-ylacrylat-copolymer

Das oben genannte Copolymer stellt man gemäss der allgemeinen Arbeitsweise von Beispiel 1 her, unter Verwendung der äquivalenten Menge eines Aethylen/Aethylacrylatcopolymers (61/39) mit einem Molekulargewicht von 28 000 im Zahlenmittel und einem Aethylacrylatgehalt von 39 Gew.-%.

Analyse:
Berechnet (%) C: 75,56; H: 11,86; N: 3,83.
Gefunden (%) C: 74,84; H: 11,38; N: 3,22.

BEISPIEL 4

Aethylen/1,2,2,6,6-Pentamethylpiperidin-4-ylacrylat-copolymer

Das oben genannte Copolymer stellt man gemäss der allgemeinen Arbeitsweise von Beispiel 1 her, unter Ersatz des 2,2,6,6-Tetramethylpiperidin-4-ols durch eine äquivalente Menge 1,2,2,6,6-Pentamethylpiperidin-4-ol und Umsetzung mit einem Aethylen/Aethylacrylatcopolymer (77/23).

Analyse:
Berechnet (%) C: 79,06; H: 12,56; N: 2,55.
Gefunden (%) C: 79,07; H: 12,36; N: 2,32.

BEISPIEL 5

Aethylen/1-(2-Acryloyloxyäthyl)-3,3,5,5-tetramethylpiperazin-2,6-dioncopolymer

Das oben genannte Copolymer stellt man gemäss der allgemeinen Arbeitsweise von Beispiel 1 her, unter Ersatz des 2,2,6,6-Tetramethylpiperdin-4-ols durch eine äquivalente Menge 1-(2-Hydroxyäthyl)-3,3,5,5-tetramethylpiperazin-2,6-dion. Die Reaktion lässt man bei 210°C ablaufen.

Analyse:
Berechnet (%) C: 75,46; H: 11,86; N: 3,86.
Gefunden (%) C: 75,43; H: 11,48; N: 3,50.

BEISPIEL 6

Aethylen/1,2,2,6,6-Pentamethylpiperidin-4-ylacrylat-copolymer

In einen wie in Beispiel 1 ausgerüsteten 1 000 ml-Rundkolben gibt man 46,2 g 1,2,2,6,6-Pentamethylpiperidin-4-ol und 50 g Aethylen/Aethylacrylatcopolymer (82/18) mit einem Molekulargewicht von 33 000 im Zahlenmittel, einem Methylacrylatgehalt von 18 Gew.-% und einer Schmelzindex von 6 g/10 Minuten (ASTM D1238, Bedingungen E).

Das Gemisch wird 30 Minuten bei 180°C unter Stickstoff erhitzt, bis praktisch das ganze Polymergranulat

geschmolzen ist. Die heisse Schmelze wird langsam zu einer heissen homogenen Masse verrührt, der man 1 g Tetrabutyltitanat zusetzt.

Die Reaktionstemperatur wird auf 210°C erhöht, und im Abstand von 4 Stunden nimmt man aliquote Proben des Produkts. Nach 12 Stunden erniedrigt man die Temperatur auf 120°C und gibt langsam unter Rühren 500 ml Toluol dazu. Die erhaltene Toluollösung wird dann langsam unter kräftigem Rühren zu 2 000 ml Methanol gegeben, um das gewünschte Produkt auszufällen. Der Niederschlag wird unter weiterem Rühren für fünf Stunden in Methanol suspendiert, bevor man ihn durch Abfiltrieren isoliert. Das isolierte Produkt wird mit Methanol gewaschen und bei Raumtemperatur/0,1 Torr 1 Stunde lang und dann bei 80°C/0,1 Torr zwei Stunden lang getrocknet. Das Copolymer wird als fliessfähiges, in heissem Toluol oder heissem Xylol leicht lösliches weisses Granulat erhalten.

Analyse:
Berechnet (%) C: 80,22; H: 13,05; N: 2,05.
Gefunden (%) C: 80,23; H: 13,07; N: 1,96.

## BEISPIEL 7

### Aethylen/2,2,6,6-Tetramethylpiperidin-4-ylacrylatcopolymer

Das oben genannte Copolymer stellt man gemäss der allgemeinen Arbeitsweise von Beispiel 6 her, unter Ersatz des 1,2,2,6,6-Pentamethylpiperidin-4-ols durch eine äquivalente Menge 2,2,6,6-Tetramethylpiperidin-4-ol. Das Produkt weist einen Schmelzindex von 8 g/10 Minuten auf (ASTM D1238, Bedingungen E).

Analyse:
Berechnet (%) C: 80,10; H: 13,02; N: 2,15.
Gefunden (%) C: 80,85; H: 12,53; N: 1,98.

Das Copolymer wird als fliessfähiges, in heissem Xylol oder heissem Toluol lösliches weisses Granulat erhalten.

## BEISPIEL 8

### Aethylen/2,2,6,6-Tetramethylpiperidin-4-ylacrylatcopolymer

Man verfährt wie in Beispiel 7, jedoch unter Verwendung eines Aethylen/Aethylacrylatcopolymers mit einem Molekulargewicht von 33 600 im Zahlenmittel und einem Aethylacrylatgehalt von 18 Gew.-%, wobei man das oben genannte Copolymer als weisses gummiartiges Granulat erhält. Das Copolymer ist in heissem Xylol oder heissem Toluol leicht löslich.

BEISPIEL 9

Aethylen/2,2,6,6-Tetramethylpiperidin-4-ylacrylatcopolymer

Man beschickt einen mit Rührer und Thermometer versehenen 500 ml-Harzkessel mit 86,1 g granuliertem Copolymer aus Aethylen/Methylacrylat (80/20) vom Schmelzindex 2 (ASTM-Methode D1238, Bedingungen E). Das Copolymer enthält 17,2 g (0,2 Mol) Methylacrylat. Man versetzt das Polymer mit 80 ml Xylol und 39,3 g (0,25 Mol) 2,2,6,6-Tetramethylpiperidin-4-ol. Man erhitzt 30 Minuten bei 150°C und gibt dann 0,23 g (0,01 Mol) Lithiumamidkatalysator dazu. Man erhitzt noch weitere 8 Stunden bei 145-150°C unter Rühren und Durchleiten eines langsamen Stickstoffstroms als Spülgas durch das System. Der Katalysator wird dann durch Zugabe von einem ml Essigsäure und nachfolgendes zwei Stunden langes Rühren bei 145°C desaktiviert.

Die viskose flüssige Masse wird auf Aluminiumblech gegossen und gekühlt. Das nunmehr erstarrte Produkt schneidet man in kleine Stücke, die in einer Wiley-Mühle mit Trockeneis gemahlen werden. Das gemahlene Produkt (160 g) wird mit insgesamt 1 000 ml Methanol in sechs Portionen gewaschen und dann bei Raumtemperatur getrocknet. Das Produkt enthält 2,02% Stickstoff (berechnet 2,52 % Stickstoff für vollständigen Ersatz des Methylesters durch sterisch gehindertes Amin).

NMR-Spektren zeigen 20% restliche Methylestergruppen im Produkt. Die Umesterung ist somit 80% vollständig. Eindampfen der Methanolwaschflüssigkeiten ergab quantitative Rückgewinnung des verbleibenden, nicht umgesetzten 2,2,6,6-Tetramethylpiperidin-4-ols (13,7 g, 0,087 Mol).

## BEISPIEL 10

Copolymer mit Amidseitengruppen

Man erhitzt ein Gemisch aus 15 g eines Aethylen/Aethylacrylatcopolymers (82/18), 36 g 4-(γ-Aminopropylamino)-2,2,6,6-tetramethylpiperidin und 13 g gemahlenem Kaliumfluorid 25 Stunden lang bei 200°C. Dann verdünnt man das Reaktionsgemisch mit 50 ml Xylol und giesst in 1 000 ml Methanol. Der entstandene Niederschlag wird abfiltriert, gründlich mit Aethanol und Wasser gewaschen und dann getrocknet. Der Stickstoffgehalt von 2,29% zeigt, dass ungefähr 40% der Aethylesterseitengruppen in sterisch gehinderte Aminamidgruppen umgewandelt sind.

## BEISPIELE 11-16

Die folgenden Polymeren werden durch Umesterung eines Aethylen/Aethylacrylatcopolymers (82/18) unter Verwendung der unten in der Tabelle angegebenen Alkohole erhalten. Die Umesterungsreaktionen werden in Gegenwart von Tetrabutyltitanat als Katalysator bei 150-200°C durchgeführt.

| Beispiel Nr. | Alkohol | Polymer | | |
|---|---|---|---|---|
| | | Polymer $M_n$ | %N Berechnet | %N Gefunden |
| 11 | $HO-(CH_2)_6-NH-$ 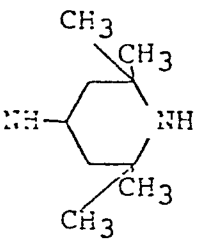 | 45500 | 3,65 | 3,29 |
| 12 | $HOCH_2CH_2-$ 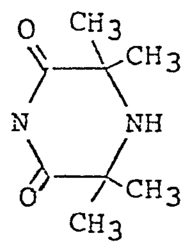 | 43000 | 3,86 | 3,32 |
| 13 | $HOCH_2CH_2-$ 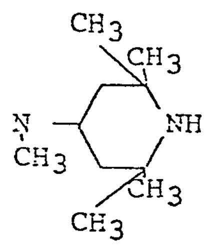 | 44000 | 3,79 | 3,19 |
| 14 | $HOCH_2CH_2OCH_2CH_2-NH-$ 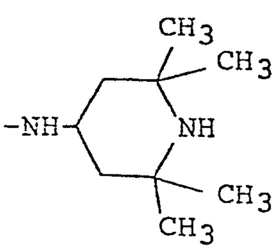 | 45000 | 3,71 | 2,95 |
| 15 | $HOCH_2CH_2OCH_2CH_2-$ 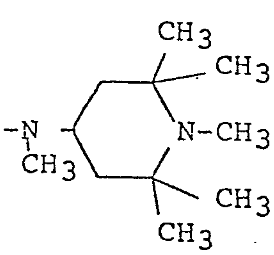 | 46500 | 3,58 | 3,08 |
| 16 | $HOCH_2CH_2-$ 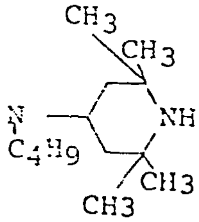 | 45,500 | 3,65 | 3,05 |

BEISPIEL 17

Kurzzeitprüfung mit UV-Lichtbestrahlung

Polypropylenpulver (Hercules Profax 6401) wird mit 0,2 Gew.-% des Antioxydans Di-(n-octadecyl)-3,5-di-tert.-butyl-4-hydroxybenzylphosphonat, das oxydativen Abbau des Polypropylens während der Verarbeitung verhindert, und 0,5% des zu prüfenden Lichtschutzmittels innig vermischt. Die vermischten Materialien werden dann 5 Minuten bei 182°C auf einem Zweiwalzenstuhl gewalzt; danach zieht man das stabilisierte Polypropylen als Walzfolie ab und lässt diese abkühlen.

Die gewalzten Polypropylenfolien werden in Stücke geschnitten und 3 Minuten in einer hydraulischen Presse bei 220°C und 12,3 kg/$cm^2$ Druck verarbeitet. Die so erhaltene, 0,127 mm dicke Folie wird in der Presse mit Wasser gekühlt.

Die 0,127 mm dicke Folie prüft man mit Höhensonnenlicht in Schwarzlichtumgebung auf das Auftreten von Carbonylabsorption im Infrarotspektrum bei 5,85 Mikron Wellenlänge, was ein Mass des durch die im Polypropylen vorhandenen Stabilisatoren verliehenen, stabilisierenden Schutzes darstellt. Das Versagen wird ausgedrückt als die erforderliche Zeit in Stunden, bis die Carbonylabsorption einen Wert von 0,5 erreicht. Ein solcher Wert steht in Beziehung mit der Verschlechterung der physikalischen Eigenschaften des Polypropylenfilmes auf nicht mehr zulässige Werte und ist dem durch die Bestrahlung mit ultraviolettem Licht verursachten Abbaugrad proportional. Die Ergebnisse sind in Tabelle A angegeben.

TABELLE A

| Polypropylen plus 0,2 Gew.-% Antioxydans* plus 0,5 Gew.-% Lichtschutzmittel aus Beispiel Nr. | Höhensonnen-Schwarzlichttest, Stunden bis zum Versagen (Carbonyl-absorption 0,5) |
|---|---|
| Ohne Lichtschutzmittel | 560 |
| 1 | 1170 |
| 2 | 1790 |
| 3 | 2200 |
| 4 | 1640 |
| 5 | 970 |
| 6 | 1270 |
| 7 | 1250 |

* Das Antioxydans ist Di-(n-octadecyl)-3,5-di-tert.-butyl-4-hydroxybenzylphosphonat.

## BEISPIEL 18

Gemäss der allgemeinen Arbeitsweise von Beispiel 17 vermischt man lineares Polyäthylen niedriger Dichte (Dowlex 2047, Ausgangsschmelzindex 3,4 g/10 Minuten), das als Antioxydans 0,015 Gew.-% Pentaerythrityl-tetrakis-(3,5-di-tert.-butyl-4-hydroxyhydrocinnamat) enthält, mit den vorliegenden Aethylencopolymer-Lichtschutzmitteln und verpresst dann zu 0,127 mm dicken Testprobenfilmen.

Diese Proben werden dann in einem Kohlelichtbogen-Weather-O-meter mit einem Wassersprühansatz, um Regen zu simulieren, und im Höhensonnen-Schwarzlichtapparat geprüft, wobei man das Auftreten von Carbonylabsorption, gemessen bei 5,85 Mikron Wellenlänge im Infrarotspektrum, als Mass des durch die Lichtschutzmittel verliehenen, stabilisierenden Schutzes nimmt. Die Ergebnisse sind in Tabelle B angeführt.

TABELLE B

| Lineares Polyäthylen plus 0,015 Gew.-% Antioxydans* plus (Gew.-%) Lichtschutzmittel aus Beispiel Nr. | | Stunden bis zum Versagen (Carbonylabsorption 0,5) Kohlelichtbogen-WeatherOmeter | Höhensonnen-Schwarzlicht |
|---|---|---|---|
| Ohne Lichtschutzmittel | | 379 | 1089 |
| 7 | (0,25) | 1881 | >4551 |
| 7 | (0,50) | 1961 | >5122 |
| 7 | (1,00) | 2036 | >5122 |
| 6 | (0,25) | 1831 | >5122 |
| 6 | (0,50) | 1833 | >5122 |
| 6 | (1,00) | 1814 | >5122 |

* Das Antioxydans ist Pentaerythrityl-tetrakis-(3,5-di-tert.-butyl-4-hydroxyhydrocinnamat).

Diese Zahlen belegen die ausgezeichnete Wirksamkeit der vorliegenden Aethylencopolymeren als Lichtschutzmittel, sogar bei sehr niedrigen Konzentrationen (0,25 Gew.-%) in linearem Polyäthylen.

Nach 1 000 Stunden bzw. 3 000 Stunden Lagerung bei Umgebungstemperaturen tritt kein Ausschwitzen der vorliegenden Aethylencopolymerlichtschutzmittel aus linearem Polyäthylen auf.

BEISPIEL 19

Polypropylen (Hercules Profax 6501), das 0,1 Gew.-% Calciumstearat aber kein Antioxydans enthält, wird mit den vorliegenden Aethylencopolymerlichtschutzmitteln vermischt. Das Gemisch wird granuliert und bei 232°C zu einem 10,2 cm breitem, 0,127 mm dickem Band extrudiert. Das Band wird in 6,4 mm breite Streifen geschnitten, die dann bei einer Temperatur von 107°C über Reckwalzen im Verhältnis 6:1 zu 0,0508 mm dicken, gereckten Folienbändchen verstreckt werden.

Das Band wird durch Lagerung in einem Ofen bei 125°C einer Langzeitwärmealterung bei 125°C unterworfen, wobei das Versagen als die erforderliche Zeit (Stunden)

ausgedrückt wird, bis der Dehnungswert auf 50% des Anfangwerts gefallen ist.

Gesonderte Proben werden auch im Kohlelichtbogen-WeatherOmeter ausgesetzt, wobei die Stunden bis zum Versagen auf die gleiche Weise ausgedrückt werden.

Die Ergebnisse sind in Tabelle C angeführt.

TABELLE C

| Polyäthylen plus 0,1 Gew.-% Lichtschutzmittel aus Beispiel Nr. | Stunden bis zum Versagen (50% Restdehnung) Kohlelichtbogen-WeatherOmeter | Langzeitwärmealterung (125°C) |
|---|---|---|
| Ohne Lichtschutzmittel | 344 | 69 |
| 8 | 977 | 471 |
| 7 | 1043 | 443 |
| 6 | 901 | 462 |

Diese Zahlen zeigen, dass die vorliegenden Aethylencopolymeren sehr wirksame Licht- und Wärmeschutzmittel für Polypropylen sind.

BEISPIEL 20

Gemäss der allgemeinen Arbeitsweise von Beispiel 19 unterwirft man 0,0508 mm dickes Polypropylenband aus Polypropylen (Hercules, Profax 6501), das 0,1 Gew.-% Calciumstearat, 0,05 Gew.-% 2,6-Di-tert.-butyl-p-kresol als Antioxydans und 0,1% eines erfindungsgemässen Aethylencopolymers enthält, einer Langzeitalterung bei 125°C, wobei als Versagen die Stunden aufgezeichnet werden, bis nur 50% des anfänglichen Dehnungswerts des Bands erreicht werden.
Die Ergebnisse sind in Tabelle D angeführt.

TABELLE D

| Polypropylen plus 0,05 Gew.-% Antioxydans* und 0,1 Gew.-% Lichtschutzmittel aus Beispiel | Stunden bis zum Versagen (50% Restdehnung) bei Langzeitwärmealterung bei 125°C |
|---|---|
| Ohne Lichtschutzmittel | 43 |
| 8 | 542 |
| 6 | 370 |

* 2,6-Di-tert.-butyl-p-kresol

Die vorliegenden Aethylencopolymeren zeigen wiederum ausgezeichnete Wärmestabilisierungseffekte für Polypropylen.

## BEISPIEL 21

Gemäss der allgemeinen Arbeitsweise von Beispiel 19 werden 0,1% des jeweiligen Stabilisators in Polypropylen eingearbeitet, das dann dem Kohlelichtbogen-Weather-Ometer ausgesetzt wird. Man bestimmt die erforderliche Zeit, bis der Dehnungswert auf 50% des Anfangswerts gefallen ist. Die Ergebnisse sind in Tabelle E angeführt.

TABELLE E

| Polypropylen plus 0,1 Gew.-% Lichtschutzmittel aus Beispiel Nr. | Stunden bis zum Versagen (50% Restdehnung) Kohlelichtbogen-Weather-Ometer |
|---|---|
| Ohne Stabilisator | 317 |
| 11 | 619 |
| 13 | 1185 |
| 14 | 1120 |
| 15 | 1190 |
| 16 | 1166 |

## BEISPIEL 22

Aethylen/Vinyl-1,2,2,6,6-pentamethylpiperidin-4-carboxylat-copolymer

Das oben genannte Copolymer stellt man gemäss der allgemeinen Arbeitsweise von Beispiel 1 her, unter Ersatz des 2,2,6,6-Tetramethylpiperidin-4-ols durch eine äquivalente Menge Methyl-1,2,2,6,6-pentamethylpiperidin-4-carboxylat und Umsetzung mit einem Aethylen/Vinylacetatcopolymer (75/25).

## BEISPIEL 23

Das Copolymer aus Beispiel 22 ist ein wirksames Licht- und Wärmeschutzmittel für Polypropylen.

Patentansprüche:

1. α-Olefincopolymere mit im wesentlichen in statistischer Verteilung verknüpften, wiederkehrenden Struktureinheiten der Formel I

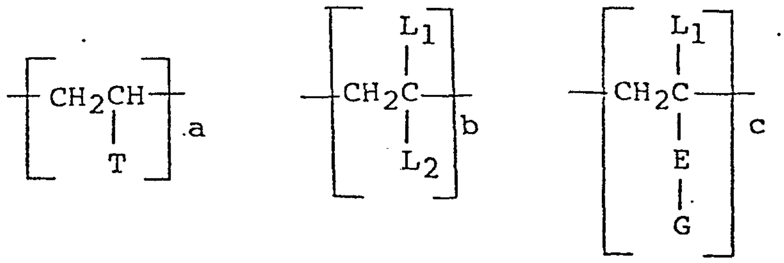

(I)

worin T für Wasserstoff, Alkyl mit 1 bis 18 Kohlenstoffatomen oder deren Gemische, $L_1$ für Wasserstoff oder Methyl, $L_2$ für Hydroxyl, $-OCOCH_3$ oder $-COOL_3$, wobei $L_3$ Wasserstoff oder Alkyl mit 1 bis 6 Kohlenstoffatomen bedeutet, und E für -COO-, -OCO-, -O- oder -CONR- stehen, wobei R Wasserstoff, Alkyl mit 1 bis 12 Kohlenstoffatomen, Aralkyl mit 7 bis 12 Kohlenstoffatomen, Cyclohexyl, Hydroxyalkyl mit 1 bis 6 Kohlenstoffatomen, Alkoxyalkyl mit 2 bis 10 Kohlenstoffatomen oder Dialkylaminoalkyl mit 3 bis 12 Kohlenstoffatomen bedeutet, und G eine einen N-heterocyclischen Ring der Formel

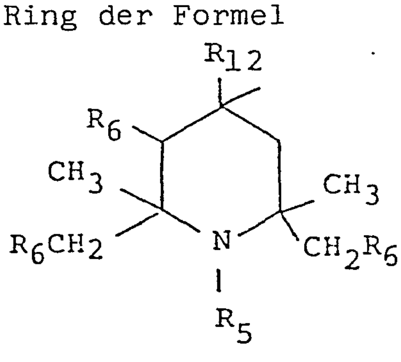

(II),

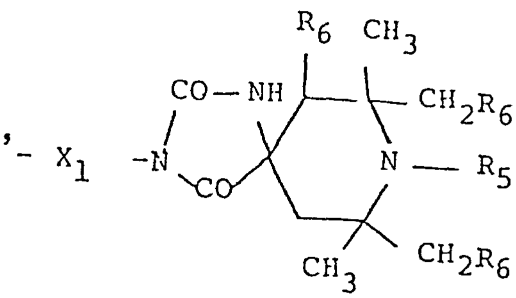

(III),

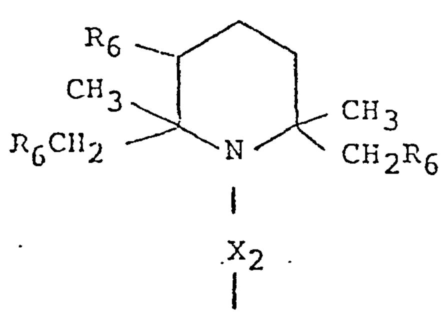

(IV),

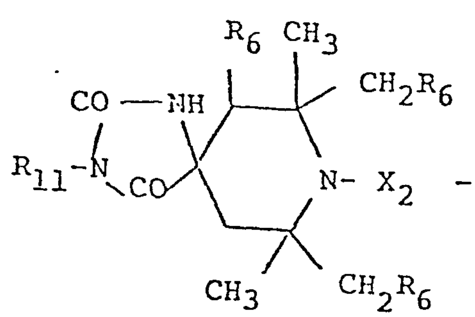

(V),

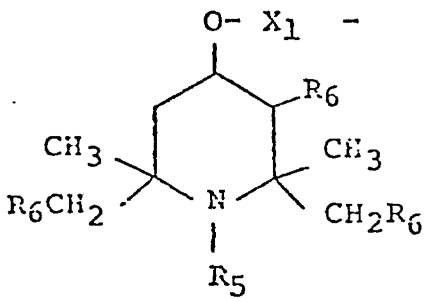

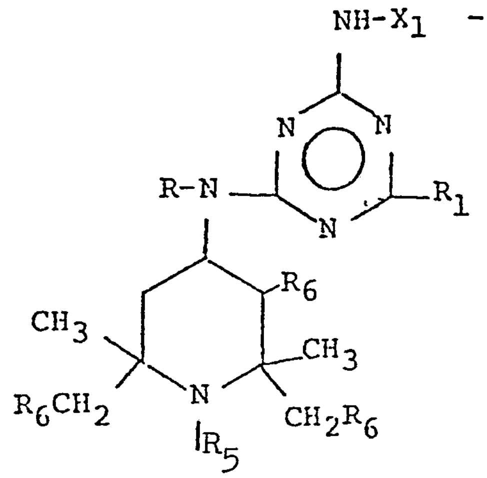

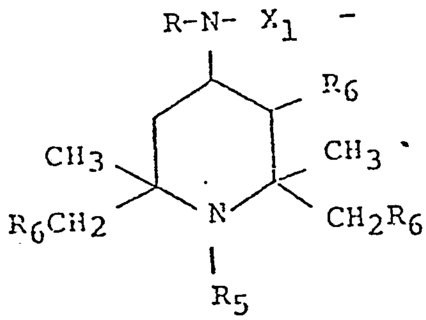

oder

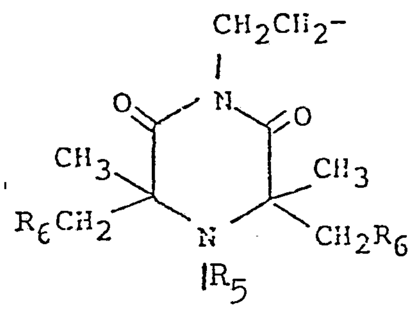

enthaltende Gruppe darstellt, worin $R_5$ für Wasserstoff, Oxyl, $C_1$-$C_{18}$-Alkyl, $C_3$-$C_8$-Alkenyl, $C_3$-$C_6$-Alkinyl, $C_7$-$C_{12}$-Aralkyl, $-CH_2CN$, $C_2$-$C_{21}$-Alkoxyalkyl, eine aliphatische Acylgruppe mit 1-4 C-Atomen oder eine der Gruppen $-CH_2COOR_7$ oder $-COOR_8$, wobei $R_7$ $C_1$-$C_{12}$-Alkyl, $C_3$-$C_8$-Alkenyl, Phenyl, $C_7$-$C_8$-Aralkyl oder Cyclohexyl und $R_8$ $C_1$-$C_{12}$-Alkyl, Phenyl, Benzyl oder Cyclohexyl bedeuten, $R_6$ für Wasserstoff oder $C_1$-$C_4$-Alkyl, $X_1$ für $C_3$-$C_{12}$-Alkylen, $-CH_2CH_2OCH_2CH_2-$ oder eine Gruppe der Formel $-CH(R_{10})-CH_2-$ (Vl), in welcher $R_{10}$ Wasserstoff, Methyl, Aethyl, Phenoxymethyl oder Phenyl bedeutet, $X_2$ für eine Gruppe der Formel Vl, in welcher $R_{10}$ die oben angegebene Bedeutung hat, oder eine Gruppe der Formel $-CH_2-CH(OH)-CH_2-$ (VII), $R_{11}$ für $C_1$-$C_{18}$-Alkyl oder gegebenenfalls durch $C_1$-$C_4$-Alkyl oder $C_1$-$C_4$-Alkoxy substituiertes Cyclohexyl, Phenyl oder Benzyl, $R_1$ für Alkoxy mit 1 bis 12 Kohlenstoffatomen, Phenoxy,

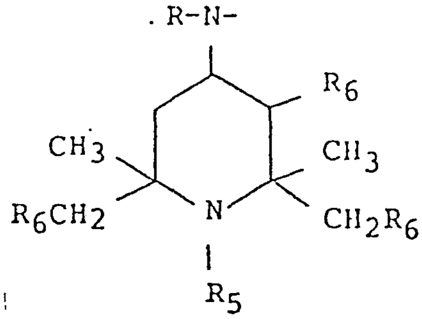

Piperidino oder $NR_2R_3$, wobei $R_2$ und $R_3$ Wasserstoff, Alkyl mit 1 bis 12 Kohlenstoffatomen, Cyclohexyl oder Benzyl bedeuten, und $R_{12}$ für Wasserstoff oder Hydroxyl stehen, mit der Massgabe, dass E -OCO- darstellt, wenn $R_{12}$ für Hydroxyl steht, und wobei a+b+c = 4 bis 2600, a = 2 bis 2400, b = 0 bis 198, c = 2 bis 200, a/a+b+c = 0,50 bis 0,99, b/a+b+c = 0 bis 0,49 und c/a+b+c = 0,01 bis 0,50 sind.

2. Copolymere nach Anspruch 1, dadurch gekennzeichnet, dass T für Wasserstoff steht.

3. Copolymere nach Anspruch 2, dadurch gekennzeichnet, dass b null ist.

4. Copolymere nach Anspruch 2, dadurch gekennzeichnet, dass $L_1$ für Wasserstoff steht.

5. Copolymere nach Anspruch 2, dadurch gekennzeichnet, dass $L_2$ $-COOL_3$ und $L_3$ Alkyl mit 1 bis 6 Kohlenstoffatomen darstellen.

6. Copolymere nach Anspruch 2, dadurch gekennzeichnet, dass E für -COO- oder -CONR- steht.

7. Copolymere nach Anspruch 2, dadurch gekennzeichnet, dass -E-G

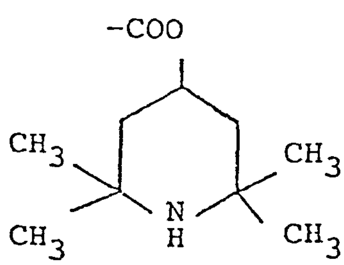

darstellt.

8. Copolymer nach Anspruch 2 aus Aethylen und 2,2,6,6-Tetramethylpiperidin-4-ylacrylat.

9. Copolymer nach Anspruch 2 aus Aethylen und

1,2,2,6,6-Pentamethylpiperidin-4-ylacrylat.

10. Copolymer nach Anspruch 2 aus Aethylen und 1-(2-Acryloyloxyäthyl)-3,3,5,5-tetramethylpiperazin-2,6-dion.

11. Stoffzusammensetzungen, dadurch gekennzeichnet, dass sie aus einem organischen Material bestehen, das licht-induziertem Abbau unterliegt und mit 0,05 bis 5 Gew.-% eines Copolymeren nach Anspruch 1 stabilisiert ist.

12. Zusammensetzungen nach Anspruch 11, dadurch gekennzeichnet, dass als organisches Material ein Polyolefin vorliegt.

13. Zusammensetzungen nach Anspruch 12, dadurch gekennzeichnet, dass als Polyolefin Polyäthylen vorliegt.

14. Zusammensetzungen nach Anspruch 12, dadurch gekennzeichnet, dass als Polyolefin Polypropylen vorliegt.

15. Zusammensetzungen nach Anspruch 11, dadurch gekennzeichnet, dass der Stabilisator ein Copolymer aus Aethylen und 2,2,6,6-Tetramethylpiperidin-4-ylacrylat ist.

16. Verfahren zum Stabilisieren von organischen Materialien, die licht-induziertem Abbau unterliegen, dadurch gekennzeichnet, dass man 0,5 bis 5 Gew.-%, bezogen auf dieses Material, eines Copolymers nach Anspruch 1 darin einarbeitet.

17. Verfahren nach Anspruch 16, dadurch gekennzeichnet, dass als organisches Material ein Polyolefin vorliegt.

18. Verfahren nach Anspruch 17, dadurch gekennzeichnet, dass als Polyolefin Polyäthylen vorliegt.

19. Verfahren nach Anspruch 17, dadurch gekennzeichnet, dass als Polyolefin Polypropylen vorliegt.

20. Verfahren nach Anspruch 16, dadurch gekennzeichnet, dass man als Stabilisator ein Copolymer aus Aethylen und 2,2,6,6-Tetramethylpiperidin-4-ylacrylat verwendet.

Europäisches Patentamt

# EUROPÄISCHER RECHERCHENBERICHT

0063544

Nummer der Anmeldung

EP 82 81 0151

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | EP-A-0 000 496 (CIBA-GEIGY) * Ansprüche 1,6-15; Seite 6 - Seite 7; Seite 20 * & US - A - 4 210 612 (Cat. D)<br>----- | 1-20 | C 08 F 210/00<br>C 08 L 101/00 |
| | | | **RECHERCHIERTE SACHGEBIETE (Int Cl 3)** |
| | | | C 08 F 210/00<br>C 08 F 210/02<br>C 08 F 210/04<br>C 08 F 210/06<br>C 08 F 210/08<br>C 08 F 210/10<br>C 08 F 210/12<br>C 08 F 210/14<br>C 08 F 210/16<br>C 08 F 210/18 |

Der vorliegende Recherchenbericht wurde für alle Patentansprüche erstellt

| Recherchenort | Abschlußdatum der Recherche | Prüfer |
|---|---|---|
| DEN HAAG | 16-07-1982 | PERMENTIER W.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82